# EUROPEAN PATENT SPECIFICATION

(11) **EP 1 025 750 B1**
(45) Date of publication and mention of the grant of the patent: **03.03.2004**
(21) Application number: 99126041.5
(22) Date of filing: 28.12.1999
(51) Int. Cl.: A01K 1/00

(54) **A gate for stable equipment, especially for pigsties**
Tür für Stallausrüstung, insbesondere für Schweineställe
Porte pour equipement d'étable, in particulier pour porcheries

(30) Priority: 11.01.1999 DK 9900009 U
(43) Date of publication of application: 09.08.2000
(73) Proprietor: EGEBJERG MASKINFABRIK A/S, 4500 Nykobing Sjaelland (DK)
(72) Inventor: Rasmussen, Henrik, 4500 Nykobing Sjaelland (DK)
(74) Representative: Olsen, Peter Vestergaard

(56) References cited:
- WO-A-81/01231
- FR-A- 544 504
- FR-A- 619 796
- GB-A- 673 991
- US-A- 2 793 897

## Description

The present invention concerns a gate for stable equipment, especially for pigsties or pigboxes, the gate being suspended with hinges along a first side edge and provided with a closing mechanism disposed at a second, opposite side edge, the closing mechanism comprising a control lever at the upper edge of the gate and disposed at a distance therefrom a seat containing a mechanism for manoeuvring a pawl together with a connecting rod between the control lever and the seat, where the second side edge mainly consists of a U-shaped section.

The known gates have a closing mechanism provided in the gate and projecting out of the section and toward the centre of the gate. The seat is then fastened, usually by welding, to the section. When using closing mechanisms of different kinds and sizes of gates, special attention has to be made to the mounting and location of the closing mechanism. By using covered gates, e.g. with plates or planks, it is necessary by the known technique to make free room around the seat for accommodating the seat. Besides making tedious the running production of different kinds and sizes of gate, cleaning of the gate is also made difficult because of the many comers around seat, connecting rod and surrounding structures.

GB-A-673,991 discloses a gate of the kind indicated above and with the seat let into the section constituting the second side edge with the connecting rod extending inside the section. However, in this prior art the second side edge is not U-shaped, and the adjacent posts carrying hinges and fittings therefore have to be provided on special projections at top and bottom of the posts, the projections extending into space perpendicularly to the plane of the gate opening. The gate according to this prior art takes up space in closed position in relatively narrow paths between sties in the stable.

### Explanation of the Invention

The peculiar feature of the invention is that the seat is let into the U-shaped section, and that the connecting rod extends inside the section where the gate comprises one or more flat elements, e.g. planks, forming a substantially closed surface in the plane of the gate, and where the open side of the U-shaped section faces the elements and accommodates a side edge or an end of the elements, wherein there is an aperture in each of the elements between the seat and the control lever to accommodate the connecting rod.

Thereby the construction and the building in of the closing mechanism into the gate are simplified. The closing mechanism may be arranged to lie completely inside the section which reduces the number of difficult accessible comers when cleaning; this also applies for wickets. The rest of the construction is thereby affected only little or not at all.

The aperture may, for example, be a bored hole. Thereby elements adjoining the connecting rod may also extend completely into the section. Element or elements to be shorter above than below the seat are avoided, and furthermore it is avoided to make a special frame of regard to planks etc. around the connecting rod and the seat. Therefore, by the invention it is possible to make more cheap the serial production of different types of gates, thus implying both manufacturing and cleaning advantages.

As indicated in claim 2, it is preferred that the seat has turned-in plate parts extending over and under the seat and abutting on the parallel sides of the U-section, and that the seat is fastened to the section with screw joints.

In order to produce uniform U-sections for different gates, it is preferred that the U-section is provided with several sets of equidistant holes along its extension for the screw joints of the seat. Thereby the seat may be placed optionally along the U-section with jumps in distance corresponding to the distance between the holes in longitudinal direction of the section.

### The Drawing

An embodiment of the invention is described in more detail with reference to the drawing, where:

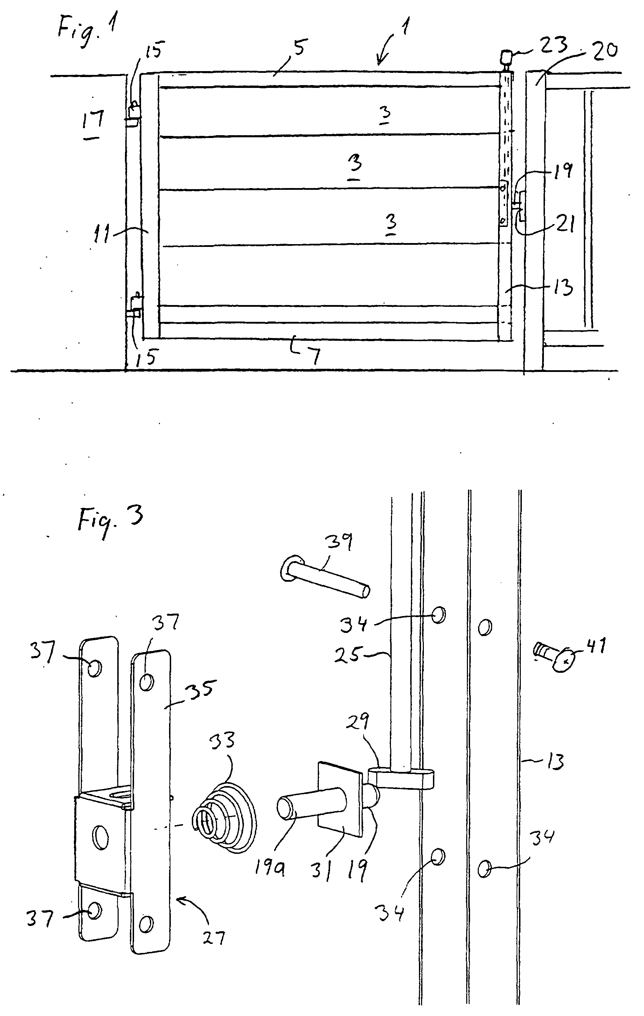

- Fig. 1: shows a gate according to the invention in mounted condition in a livestock stable,
- Fig. 2: shows an exploded view of an upper and a side edge section for the frame of the gate and the closing mechanism,
- Fig. 3: shows an enlarged detail of Fig. 2,
- Fig. 4: shows the parts in Fig. 2 in assembled state, and
- Fig. 5: shows the detail according to Fig. 3 in assembled state.

### Description of Embodiment

An embodiment of the invention is a gate 1 of the closed type and with planks 3 of plastic extending horizontally and filling the centre area of the gate. The planks 3 are of a construction known per se.

The upper edge 5 and lower edge 7 of the gate consist of tubes 9 with quadratic cross section. The two side edges 11 and 13 consist of U-sections into which the planks 3 protrude. One edge 11 is suspended with hinges 15 on the adjoining fixed stable equipment 17. The other edge 13 contains the closing mechanism, the pawl or latch bolt 19 of which can engage a hole 21 in a post 20 on another part of the fixed stable equipment. A rotatable control lever 23 is located at the upper edge 5 above the section 13 for operating the closing mechanism and thereby releasing the pawl 19 which in the shown embodiment is spring loaded toward the locking position where the gate may be shut.

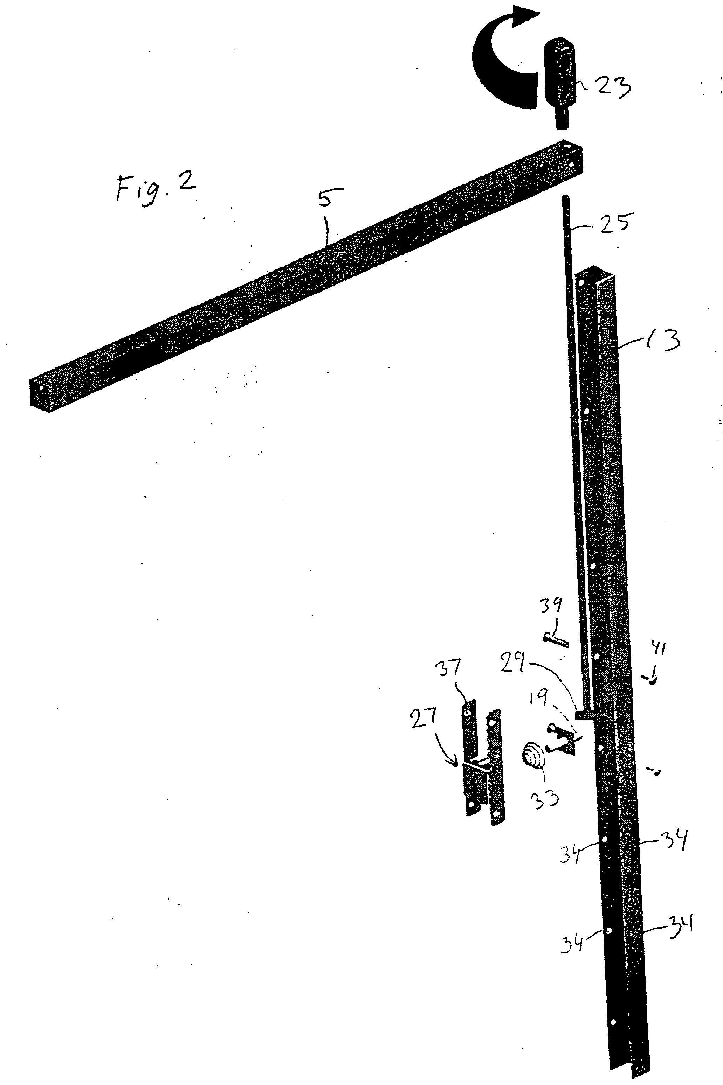

As shown on Fig. 2, there is a rod 25 in a way known per se for connecting the lever 23 with a mechanism situated in a seat 27. The rod 25 transmits a turning movement to a transverse piece 29 which may force a transverse plate piece 31 fixed to the pawl 19 in direction away from the section 13 and the post 20. A conical compression spring 33, which only takes up very little space in compressed state, acts on the plate piece 31 and thereby on the pawl 19 in opposite direction, i.e. toward the locking position. In principle, the mechanism in the seat 27 is known by itself, but is here made very compact.

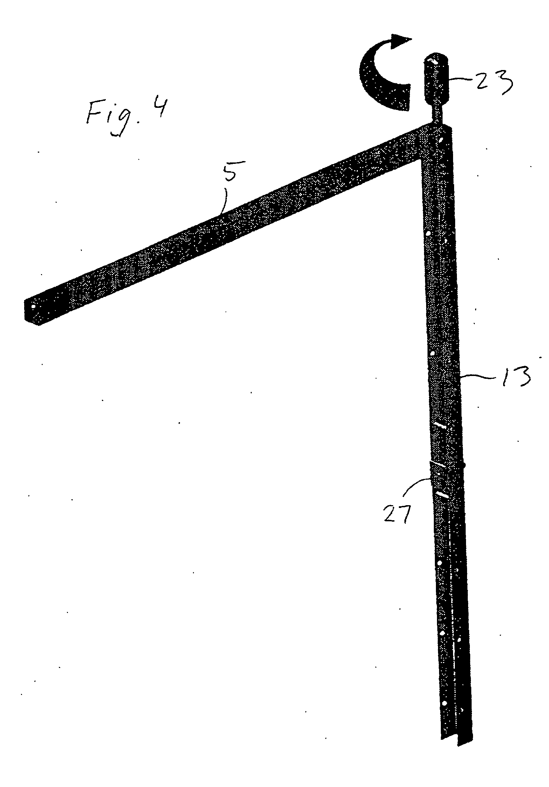

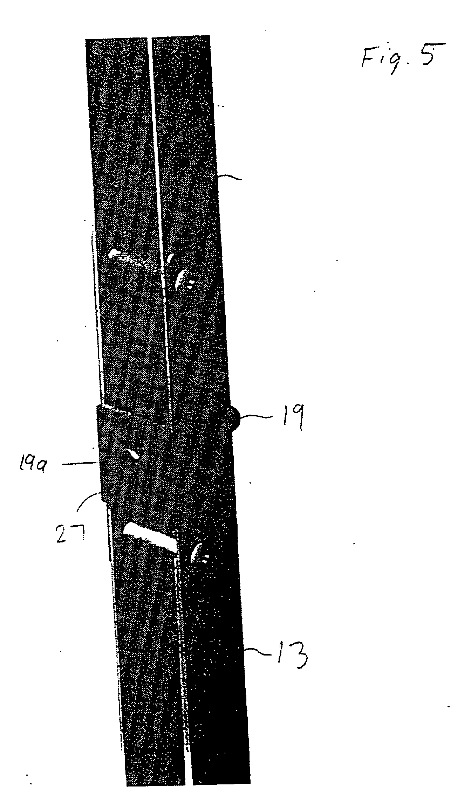

The seat 27 is a housing made of bent plate material and designed to accommodate the pawl 19 with plate piece 31, spring 33 and lower part of the rod 25 with transverse piece 29. The oppositely directed end 19a of the pawl is guided in a hole at the rear side of the seat, as shown on Fig. 3 and 5.

For fastening the seat 27, there is provided a row of mutually equidistant, throughgoing apertures 34 located mutually opposite in pairs in the mutually parallel sides of the section 13. The seat 27 has two mutually parallel parts 35 which in the shown embodiment are arranged to abut on opposite outer sides of the U-section 13. In the parts 35 there are holes 37 provided in pairs with the same mutual distance as the apertures 34. For mounting the seat 27 there is used threaded pipes 39 and threaded rods 41, both with heads. Thereby the seat 27 may be placed at different places along the section 13.

Other embodiments of the gate according to the invention are possible. Thus the gate may have bars instead of planks at its centre area, or a combination thereof. The seat may be fastened to the edge section in other ways, e.g. by welding.

## Claims

1. A gate for stable equipment, especially for pigsties or -boxes, the gate being suspended with hinges along a first side edge and provided with a closing mechanism disposed at a second, opposite side edge, the closing mechanism comprising a control lever at the upper edge of the gate and disposed at a distance therefrom a seat containing a mechanism for manoeuvring a pawl together with a connecting rod between the control lever and the seat, where the second side edge mainly consists of a U-shaped section, **characterised in that** the seat is let into the U-shaped section, and that the connecting rod extends inside the section, where the gate comprises one or more flat elements, e.g. planks, forming a substantially closed surface in the plane of the gate, and where the open side of the U-shaped section faces the elements and accommodates a side edge or an end of the elements, wherein there is an aperture in each of the elements between the seat and the control lever to accommodate the connecting rod.

2. A gate according to claim 1, wherein the seat has turned-in plate parts extending over and under the seat and abutting on the parallel sides of the U-section, and that the seat is fastened to the section with screw joints.

3. A gate according to claim 2, wherein the U-section is provided with several sets of equidistant holes along its extension for the screw joints of the seat.

## Patentansprüche

1. Gatter für Stallausrüstung, insbesondere für Schweineställe oder -boxen, wobei das Gatter entlang einer ersten Seitenkante mit Scharnieren aufgehängt ist und mit einem Schließmechanismus versehen ist, der an einer zweiten, entgegengesetzten Seitenkante angeordnet ist, wobei der Schließmechanismus einen Steuerhebel an der Oberkante des Gatters und in einem Abstand davon angeordnet eine Aufnahme aufweist, die einen Mechanismus enthält, der dazu dient, eine Klinke zusammen mit einer Verbindungsstange zwischen dem Steuerhebel und der Aufnahme zu manövrieren, wobei die zweite Seitenkante hauptsächlich aus einem U-förmigen Abschnitt besteht, **dadurch gekennzeichnet, dass** die Aufnahme in den U-förmigen Abschnitt eingelassen ist und dass sich die Verbindungsstange innerhalb des Abschnitts erstreckt, wobei das Gatter ein oder mehrere flache Elemente, z.B. Bohlen, aufweist, die eine im wesentlichen geschlossene Oberfläche in der Ebene des Gatters ausbilden, und wobei die offene Seite des U-förmigen Abschnitts den Elementen gegenüberliegt und eine Seitenkante oder ein Ende der Elemente beherbergt, wobei sich in jedem der Elemente zwischen der Aufnahme und dem Steuerhebel eine Öffnung zum Beherbergen der Verbindungsstange befindet.

2. Gatter nach Anspruch 1, bei dem die Aufnahme eingedrehte Plattenteile hat, die sich über und unter der Aufnahme erstrecken und an die parallelen Seiten des U-Abschnitts anstoßen, und dass die Aufnahme mit Schraubverbindungen an dem Abschnitt befestigt ist.

3. Gatter nach Anspruch 2, bei dem der U-Abschnitt entlang seiner Ausdehnung mit mehreren Sätzen von äquidistanten Löchern für die Schraubverbindungen der Aufnahme versehen ist.

## Revendications

1. Porte pour un équipement d'étable, en particulier pour des porcheries ou des boxes, la porte étant suspendue par des gonds le long d'un premier bord latéral et munie d'un mécanisme de fermeture disposé sur un second côté latéral opposé, le mécanisme de fermeture comprenant un levier de commande sur le bord supérieur de la porte et disposé à une certaine distance, un siège contenant un mécanisme pour l'actionnement d'un cliquet en conjonction avec une tige de connexion entre le levier de commande et le siège, le second bord latéral comprenant principalement une section en forme de U, **caractérisée en ce que** le siège est placé dans la section en forme de U et la tige de connexion s'étend à l'intérieur de la section, la porte comprenant un ou plusieurs éléments plats, par exemple, des planches formant une surface sensiblement fermée dans le plan de la porte et le côté ouvert de la section en forme de U faisant face aux éléments et recevant un bord latéral ou une extrémité des éléments, dans laquelle une ouverture existe dans chacun des éléments entre le siège et le levier de commande pour recevoir la tige de connexion.

2. Porte selon la revendication 1, dans laquelle le siège possède des parties de plaque tournées vers l'intérieur s'étendant sur et en dessous du siège et en butée contre les côtés parallèles de la section en forme de U et le siège est fixé sur la section à l'aide de fixations par vis.

3. Porte selon la revendication 2, dans laquelle la section en U est munie de plusieurs ensembles de trous équidistants le long de son extension pour les fixations par vis du siège.
